# EUROPEAN PATENT APPLICATION

(11) **EP 0 606 849 A2**
(43) Date of publication of application: **20.07.1994**
(21) Application number: 94100117.4
(22) Date of filing: 05.01.1994
(51) Int. Cl.: G01N 21/89

(54) **Surface inspecting apparatus**

(30) Priority: 11.01.1993 JP 2909/93
(71) Applicant: FUJI PHOTO FILM CO., LTD., Kanagawa 250-01 (JP)
(72) Inventor: Takahashi, Ippei, Minami-Ashigara-shi, Kanagawa (JP); Sano, Shoichi, Fujinomiya-shi, Shizuoka (JP); Kubota, Toshiharu, Fujinomiya-shi, Shizuoka (JP)
(74) Representative: Grünecker, Kinkeldey, Stockmair & Schwanhäusser Anwaltssozietät

(57) **Abstract**

A surface inspecting apparatus has a laser oscillator. A laser beam is emitted to have a width L1. A rotary polygon mirror scans the surface of the film web by use of the beam in a width direction of the web, while the web is transported continuously. Two blocking plates are disposed in a path of the beam from the web and are impenetrable to the beam. A slot is formed between the blocking plates and has a width L2 where L2 L1. The beam is passed through the slot after scanning the web. A laser receiver receives the beam from the slot so as to detect the beam, and converts the beam into a photoelectric signal. The photoelectric signal is evaluated. Existence of a surface defect on the web is detected, if the photoelectric signal is in a predetermined range.

## Description

### BACKGROUND OF THE INVENTION

### 1. Field of the Invention

The present invention relates to a surface inspecting apparatus of a beam-scanning type. More particularly, the present invention relates to a surface inspecting apparatus capable of detecting even inconspicuous flaws.

### 2. Description Related to the Prior Art

As is disclosed in JP-A 59-220636, JP-U 51-88282 and 51-89483, there are known inspecting apparatuses for scanning a surface of a continuously moving continuous web, such as films, paper sheets, thin plates or the like, with a laser beam in the direction across the movement of the web to detect surface defects of the web. The laser beam is either reflected on or transmitted through the web. These surface inspecting apparatus utilizes a photoreceptor or receiver adapted to receive laser beam modulated by surface defects to provide photoelectric signals. Based on the photoelectric signals, it is judged whether the web has unacceptable surface defects, such as remarkable dust stuck on it. Because they are non-contact devices and permit high speed surface defect detection, these surface inspection apparatus can be used in a production line for web products.

In front of the receiver of the surface inspecting apparatus is disposed a laser-blocking plate, in which a beam receiving slot is formed. The laser beam reflected on or trasmitted through the web is passed through the slot, and then applied to the receiver. Change in the photoelectrical signal from the receiver is monitored so as to detect a defect. Such a slot-centered type of the inspecting apparatus is useful specially in detecting defects at which the density of the web is changed and which change the amount of the laser beam, for example dirt, dust, or pin holes of the web.

The slot of the surface inspecting apparatus has a regular width, and lies in parallel with a scanning line defined by movement of the laser beam. While the laser beam scans an intact portion of the web, namely without defect, an output generated from the receiver should be kept from great fluctuation, so that the width of the slot is set greater than a diameter of the laser beam.

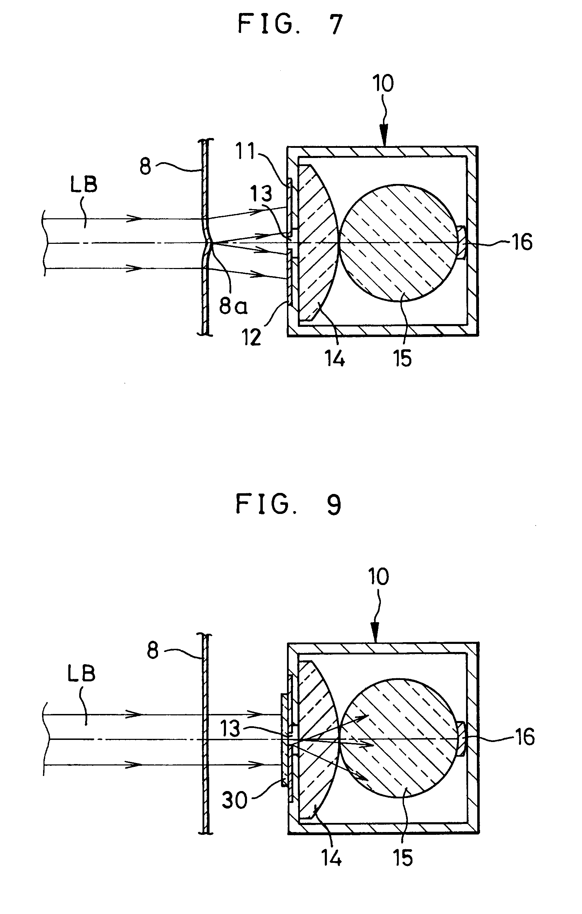

The conventional surface inspecting apparatus, however, has a problem because it frequently misses detection of "pressed flaws", which take place on the web in a locally depressed shape (see Fig. 7), differently from the above density-changed defects. When the laser beam is applied to such a pressed flaw, the flaw affects the path of the laser beam to a small amount, but does not change the amount of the laser beam as measured by the receiver. Therefore, the laser beam applied to the inconspicuous pressed flaw is received by the receiver at a normal amount, which would cause the inspecting apparatus to misinterpret as if the pressed flaw were an intact portion.

It is conventionally known besides the above slot-centered type, to construct a mask-centered type of a surface inspecting apparatus. According to this, the inspecting apparatus has a beam receiving window formed in front of a receiver. Amid the window is disposed laser-blocking mask, which has a regular width, and lies in parallel with the scanning line of the laser beam. The mask defines upper and lower slots inside the window. The laser beam from an intact portion of the web is blocked by the mask, which causes the receiver to detect little or no laser. When the laser beam is applied to a defect, the laser beam is locally diffused, passed through the slots, and then applied to the receiver. Rises in the photoelectric signal from the receiver is monitored so as to detect a defect. Such a mask-centered type of the inspecting apparatus is useful specially in detecting defects which constitute local irregularity on the web and scatter the direction of the laser beam, for example transparent dust, or scratches of the web.

The mask-centered inspecting apparatus also misses detection of pressed flaws. It would be possible to conceive adaption of the mask-centered type to solving the problem of missing detection. However, such adaptation is highly difficult, because it would require a laser-blocking mask having an extremely small width, being mounted on the receiver with overall high precision.

### SUMMARY OF THE INVENTION

In view of the foregoing problems, an object of the present invention is to provide a surface inspecting apparatus of a beam-scanning type, capable of detecting inconspicuous pressed flaws without fail.

Another object of the present invention is to provide a surface inspecting apparatus, capable of detecting inconspicuous pressed flaws with great ease.

In order to achieve the above and other objects and advantages of this invention, a surface inspecting apparatus has a beam source for emitting a beam having a first width. Scanning means scans the surface of the web by use of the beam in a direction of a width of the web. Blocking means is disposed in a path of the beam from the web and impenetrable to the beam. A slot is formed in the blocking means and has a second width set equal to or below the first width. The beam is passed through the slot after scanning the web. Photoreceptor means receives the beam from the slot so as to detect the beam, and converts the beam into a photoelectric signal. Evaluating means evaluates the photoelectric signal, and detects existence of a surface defect on the web if the photoelectric signal is in a predetermined range.

In the present invention, inconspicuous pressed flaws can be detected easily without fail as well as density-changed defects, because, when the laser beam is applied to such a pressed flaw, the flaw changes the amount of the laser beam as sensed by the receiver.

### BRIEF DESCRIPTION OF THE DRAWINGS

The above objects and advantages of the present invention will become more apparent from the following detailed description when read in connection with the accompanying drawings, in which:
Fig. 1 is a perspective view illustrating overall arrangement of a surface inspecting apparatus;
Fig. 2 is a cross section illustrating a receiver of the inspecting apparatus with a film web to be inspected;
Fig. 3 is a block diagram illustrating circuitry incorporated in the inspecting apparatus for processing signals;
Fig. 4 is a block diagram illustrating circuits relevant to processing of outputs from photomultipliers;
Fig. 5 is an explanatory view illustrating a receipt of a laser beam in well-centered state into a slot;
Fig. 6 is an explanatory view illustrating a receipt of a laser beam in off-center state into a slot;
Fig. 7 is an explanatory view illustrating a path of the laser beam relative to a pressed flaw;
Fig. 8 is a timing chart illustrating waveforms of relevant circuits constituting the circuitry of Fig. 3; and
Fig. 9 is a cross section illustrating an embodiment in which a diffuser plate is mounted on the receiver.

### DETAILED DESCRIPTION OF THE PREFERRED

### EMBODIMENTS OF THE PRESENT INVENTION

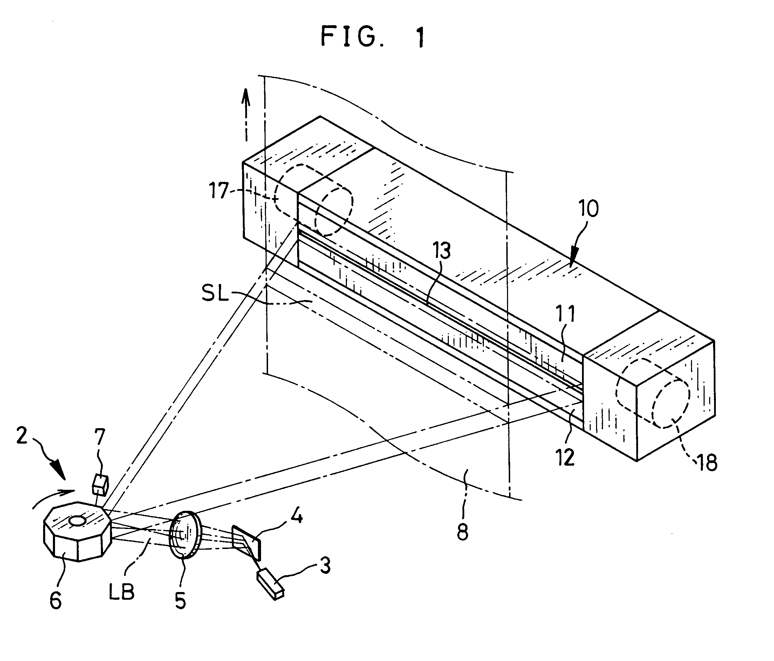

In Fig. 1 illustrating a surface inspecting apparatus of the present invention, a scanner 2 is constituted of a laser oscillator 3, a mirror 4, a lens 5, a rotary polygon mirror 6 having an octagonal shape, and a photo sensor 7. Laser is emitted from the laser oscillator 3, passed through the lens 5 and condensed to be laser beam LB, which has diameter or width L1 of 5 mm. The film web 8 having a continuous shape is transported continuously in the arrowed direction in Fig. 1. While the polygon mirror 6 is rotated at a high speed clockwise, the laser beam LB is reflected by the polygon mirror 6, so that the laser beam LB scans the film web 8 in the direction along the width of the film web 8, i.e. at the location along a scanning line SL. The laser beam LB, slightly before scanning one line across the film web 8, is applied to the photo sensor 7, which in response to the receipt of the laser beam LB, generates a reference point signal S6, which will be described later in detail.

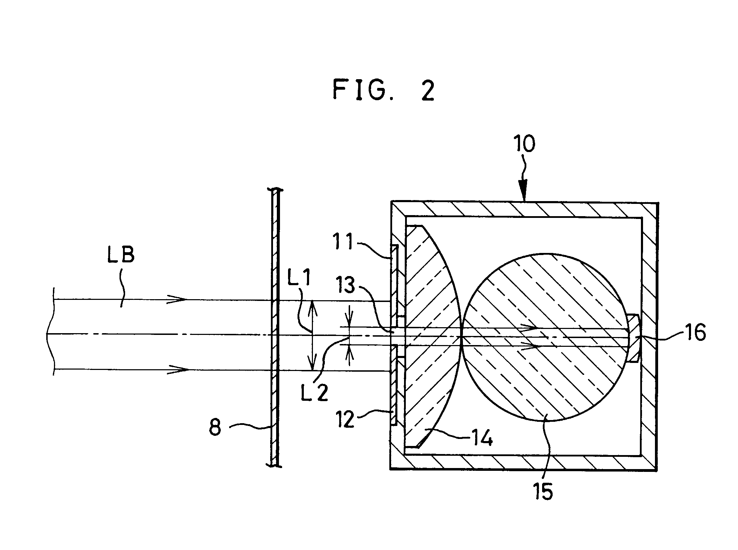

A photoreceptor or receiver 10 is disposed behind the film web 8 and in parallel with the scanning line SL, and so located as to receive the laser beam LB passed through the film web 8. As is illustrated in Fig. 2, a pair of blocking plates 11 and 12 are disposed in front of the receiver 10. A beam passing slot 13 is defined between the blocking plates 11 and 12, and has a width L2 of 1 mm in parallel with the scanning line SL. Note that the width L2 is adjustable by varying the positions of the blocking plates 11 and/or 12. The receiver 10 incorporates a cylindrical lens 14, a transparent acrylic rod 15, and a scattering belt 16, which are arranged in the order listed and behind the slot 13. The laser beam LB past the slot 13 is condensed by the cylindrical lens 14, passed into and through the transparent rod 15, and applied to the scattering belt 16, which reflects the laser beam LB. At least part of the laser beam LB reflected by the scattering belt 16 is transmitted inside the transparent rod 15, reflected by the surface of the transparent rod 15 toward the inside of the transparent rod 15 and in repetitive manner, and transmitted up to two ends of the transparent rod 15 without being reduced. A pair of photomultipliers (PMT) 17 and 18 are disposed on the ends of the transparent rod 15 as illustrated in Fig. 1, and receives energy of at least part of the laser beam LB.

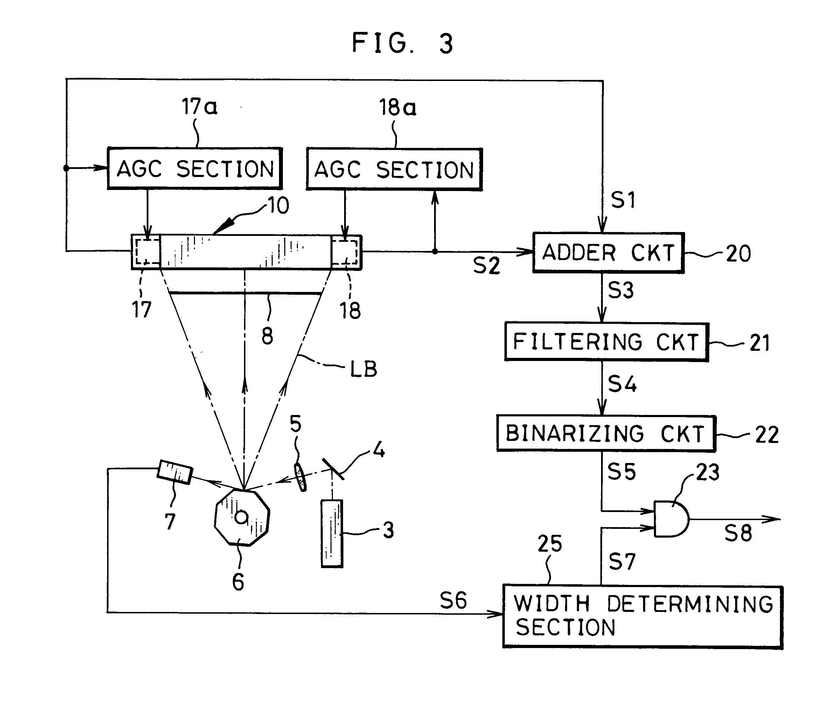

Fig. 3 illustrates relevant circuitry of the surface inspecting apparatus. The photomultipliers 17 and 18 convert the energy of the laser beam LB photoelectrically into respective outputs S1 and S2 in proportion to the intensity or amount of the laser beam LB passed through the film web 8. The photoelectric outputs S1 and S2 are supplied into respective automatic gain control (AGC) sections 17a and 18a and an adder circuit 20. The adder circuit 20 adds up the two photoelectric outputs S1 and S2 to generate an output S3.

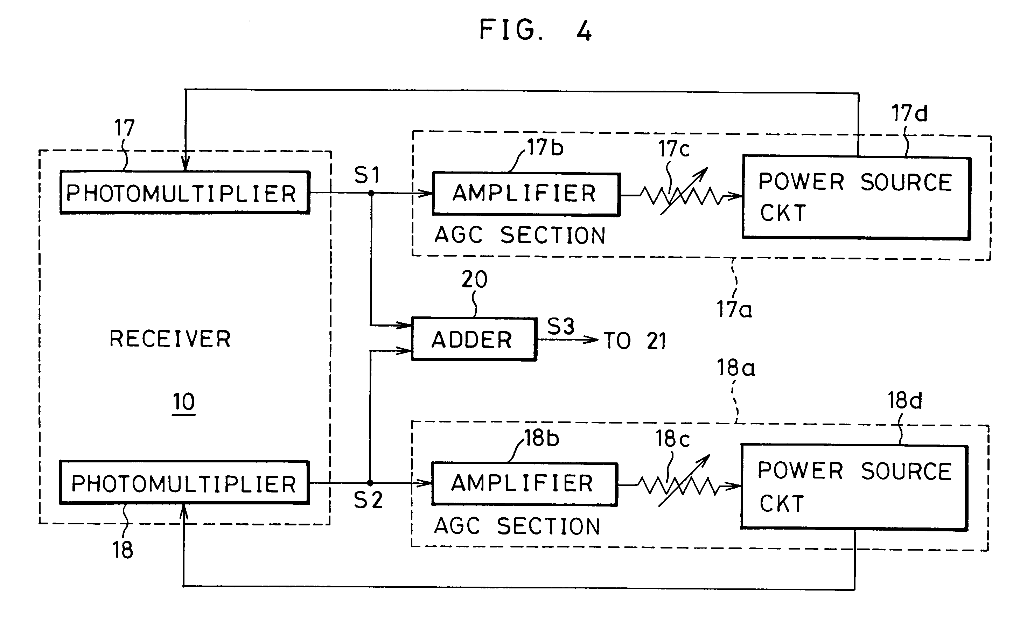

In Fig. 4, the AGC section 17a is constituted of an amplifier 17b, a variable resistor 17c, a power source circuit 17d. The amplifier 17b has an integrator (not shown) connected thereto, for integrating operation. The photoelectric output S1 generated from the photomultiplier 17 is integrated and amplified at the amplifier 17b. The variable resistor 17c is manually operable, and set at a desired resistance. A signal of the amplified value from the amplifier 17b is supplied into the power source circuit 17d, and changeable in accordance with the resistance determined at the variable resistor 17c. The power source circuit 17d, in a normal state, supplies the photomultiplier 17 with electric power at a preset voltage. If the amplified value from the amplifier 17b is high, then the voltage to be applied to the photomultiplier 17 is lowered below the preset voltage. If the amplified value from the amplifier 17b is low, then the voltage to be applied to the photomultiplier 17 is raised over the present voltage. Therefore, the level of the output S1 from the photomultiplier 17 is automatically regulated, in accordance with the resistance set in the variable resistor 17c via external operation. The AGC section 18a also has an amplifier 18b, a variable resistor 18c, a power source circuit 18d, and is similar to the AGC section 17a.

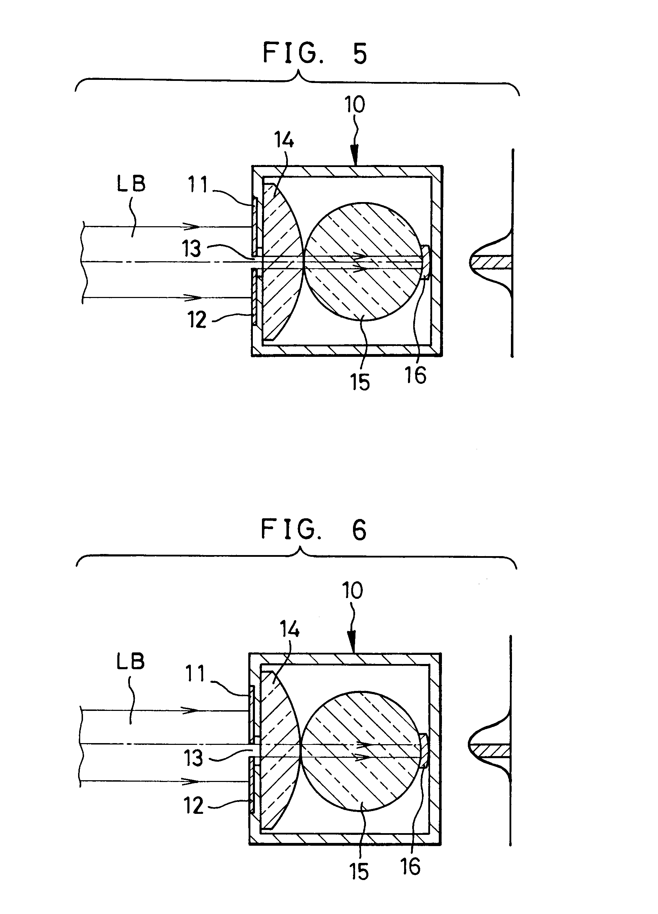

The AGC sections 17a and 18a so operate as to regulate a range of the outputs S1 and S2 substantially in a level without great deviation. When the laser beam LB scans an intact portion on the film web 8 and then received by the receiver 10, the AGC sections 17a and 18a are caused to generate the outputs S1 and S2 at the regulated range, irrespective of deviation of the center line of the laser beam LB. In Figs. 5 and 6, graphs associated with the receiver 10 illustrate distribution of intensity of the laser beam LB after being received in the receiver 10. The laser beam LB in Fig. 5 is received into the slot 13 without deviation in position of the center line. The laser beam LB in Fig. 6 is received into the slot 13 while deviated upwards of the receiver 10, for example due to thermal expansion of a relevant mechanical structure. The AGC sections 17a and 18a cause the photomultipliers 17 and 18 to generate the respectively adjusted outputs S1 and S2, in either well-centered or off-center status of the laser beam LB. The AGC sections 17a and 18a also operate for compensation of reduction in entire energy of the laser beam LB when the laser oscillator 3 is degraded in course of long use.

The added output S3 from the adder circuit 20 is supplied into the filtering circuit 21 incorporating a band-pass filter. The filtering circuit 21 eliminates noise components of high and low frequencies with which the added output S3 is overlaid, so as to emphasize the added output S3 in a form of a signal S4, which is supplied into a binarizing circuit 22. A threshold value THLD, as illustrated in Fig .8, is preset in the binarizing circuit 22, which compares it with the emphasized signal S4 so as to binarize the emphasized signal S4 in a form of a binary signal S5. If the emphasized signal S4 is equal to or below the threshold value THLD, then the binary signal S5 is at a High level representing a defect. If the emphasized signal S4 is over the threshold value THLD, then the binary signal S5 is at a Low level representing an intact status without defect. The binary signal S5 is supplied into an AND gate 23.

The photo sensor 7, upon the receipt of the laser beam LB, generates the reference point signal S6 at a predetermined time point prior to a beginning of scanning of the scanning line SL with the laser beam LB. The reference point signal S6 is supplied into a width determining circuit or timer 25, in which constant data is preset in correspondence with the width of the film web 8. At a lapse of a period AT from a point of the reference point signal S6, the width determining circuit 25 generates a time width signal S7 which stands at a High level during a time width T. The AND gate 23 is supplied with the time width signal S7 at the High level during T. If binary signal S5 as representing a defect comes into the AND gate 23 during the time width T with the time width signal S7 kept High, then the AND gate 23 generates an evaluating signal S8.

The operation of the present surface inspecting apparatus will be described now referring to Figs. 3, 7 and 8. The laser is emanated from the laser oscillator 3, reflected on the mirror 4, and condensed by the lens 5 to be the laser beam LB, which is applied to the polygon mirror 6 while rotated at the high speed. The laser beam LB reflected on the polygon mirror 6 is applied to, and transmitted through, the film web 8, and passed into the slot 13. The laser beam LB is brought into the transparent rod 15, repetitively reflected within the transparent rod 15, and received by the photomultipliers 17 and 18. The photomultipliers 17 and 18 supply the photoelectric outputs S1 and S2 into the adder circuit 20.

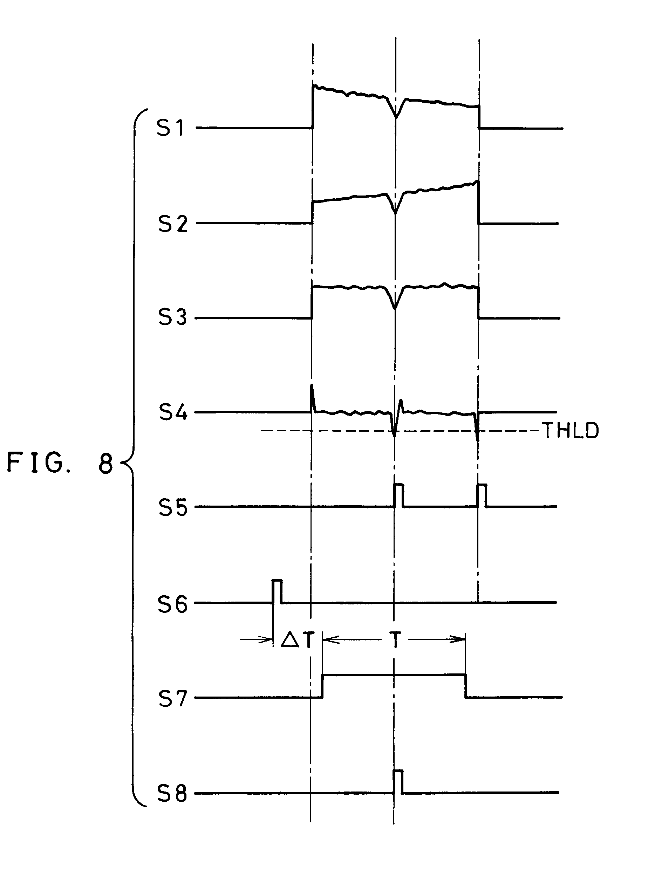

If the laser beam LB is applied to a pressed flaw 8a as shown in Fig. 7, the laser beam LB is split into two, upper and lower courses, so that little or no laser is passed into the slot 13. The output level of each photomultiplier 17, 18 is minimized in response to the scanning of the pressed flaw 8a. Waveforms of the outputs S1 and S2 in the course of scanning operation of the scanning line SC are illustrated in Fig. 8.

The added output S3, as sum of the outputs S1 and S2, is converted by the filtering circuit 21 into the emphasized signal S4. The emphasized signal S4 is converted by the binarizing circuit 22 into the binary signal S5, which is supplied into the AND gate 23.

The period AT lapses from the reference point signal S6. The width determining circuit 25 generates the time width signal S7. The binary signal S5 comes into the AND gate 23 during the time width T with the time width signal S7 kept High. The AND gate 23 generates the evaluating signal S8, which is supplied into a CPU (not shown). A display panel (not shown) is caused by the CPU to display information of "Defect". Note that, when dirt or dust stuck on the film web 8 is scanned by the laser beam LB, little or no laser is passed into the slot 13. The dirt or dust is also detected by the present invention, to cause the display panel to shown the information of "Defect". Fig. 9 illustrates another embodiment, in which electrical noises overlaid on the photoelectric signals are further prevented. In front of the slot 13 is disposed a transparent diffuser plate 30, which diffuses the laser beam LB passed through the film web 8. The laser beam LB, as diffused by the diffuser plate 30, is passed through the slot 13. The diffusion of the laser beam LB is an advantage in that, even if minute irregularity or flaws exists on any of the cylindrical lens 14, rod 15 and scattering belt 16, such minute irregularity is prevented from causing electrical noises overlaid on the photoelectric signals to be generated from the photomultipliers 17 and 18.

In the above embodiment, the pressed flaw 8a in Fig. 7 has a shape on the film web 8 deformed in the direction of advancement of the laser beam LB. The present invention is also applicable to a pressed flaw having a shape on the film web 8 deformed in reverse to advancement of the laser beam LB. When the latter pressed flaw is scanned, an upper component of the laser beam LB is refracted downwards, and a lower component of the laser beam LB is refracted upwards. Those components are so superposed as to raise the intensity of the laser while passed through the slot 13. The photoelectric outputs S1 and S2 have each maximal point, in response to the pressed flaw. For binarization of the emphasized signal S4, the surface inspecting apparatus presets a threshold value adapted to the maximal value of the photoelectric signal. If the emphasized signal S4 is below or equal to the threshold value, then a binary signal representing a defect is generated, e.g. at the "High" level. If the emphasized signal S4 is over the threshold value, then a binary signal representing an intact portion is generated, e.g. at the "Low" level.

In the above embodiment, the laser beam LB in the surface inspecting apparatus is transmitted through the film web 8, and then received in the receiver 10. Alternatively, the present invention is applicable to a surface inspecting apparatus of a beam reflecting type, in which the laser beam LB is applied to and reflected by a film web, and then received in a receiver.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. An apparatus for inspecting a surface of continuously transported web (8), comprising:
a beam source (3) for emitting a beam (LB) having a first width (L1);
scanning means (6) for scanning said surface of said web by use of said beam in a direction of a width of said web;
blocking means (11, 12) disposed in a path of said beam from said web and impenetrable to said beam;
a slot (13) formed in said blocking means and having a second width (L2) set equal to or below said first width, said beam passed through said slot after scanning said web;
photoreceptor means (10) for receiving said beam from said slot so as to detect said beam, said photoreceptor means converting said beam into a photoelectric signal (S1, S2); and
evaluating means (7, 20, 21, 22, 25) for evaluating said photoelectric signal, said evaluating means detecting existence of a surface defect on said web if said photoelectric signal
is in a predetermined range.

2. A surface inspecting apparatus as defined in claim 1, wherein said scanning means comprises a polygon mirror (6) disposed rotatably for reflecting toward said web (8) said beam (LB) from said beam source (3), and said polygon mirror rotates so as to scan said web.

3. A surface inspecting apparatus as defined in claim 2, further comprising automatic gain control means (17a, 18a) connected to said photoreceptor means (10) for amplifying said photoelectric signal (S1, S2) with a large gain when said photoelectric signal has a low level, so as to facilitate evaluation of said beam passed through said slot (13) when intensity of said beam has a low level.

4. A surface inspecting apparatus as defined in claim 3, wherein said blocking means is constituted of a pair of blocking plates (11, 12) between which said slot (13) is defined.

5. A surface inspecting apparatus as defined in claim 3, wherein said web (8) has transmittance, said slot (13) is disposed behind said web, and said beam (LB) is passed through said web and then directed to said slot.

6. A surface inspecting apparatus as defined in claim 3, wherein a transparent diffuser plate (30) is mounted on said slot (13) for diffusing said beam (LB) as applied thereto.

7. A surface inspecting apparatus as defined in claim 3, wherein said photoreceptor means (10) further includes:
a transparent rod member (15) disposed behind said slot (13), said beam (LB) introduced into said rod member, within which energy of said beam is transmitted to two ends of said rod member; and
first and second photomultipliers (17, 18) respectively disposed on said ends of said rod member for generating respective outputs (S1, S2) in correspondence with said energy of said beam, said outputs constituting said photoelectric signal (S1, S2).

8. A surface inspecting apparatus as defined in claim 7, wherein said photoreceptor means (10) further includes:
a cylindrical lens (14) disposed behind said slot (13) for condensing said beam (LB) so as to introduce said beam into said rod member (15); and
scattering means (16) disposed on a rear of said rod member for scattering said beam into said rod member, so as to transmit said energy of said beam to said ends of said rod member.

9. A surface inspecting apparatus as defined in claim 3, wherein said evaluating means includes:
a monitoring circuit (7, 25) for monitoring a period of respective operation of scanning said web (8) in said width direction with said beam (LB);
an adder circuit (20) connected to said first and second photomultipliers (17, 18) for adding up said outputs (S1, S2) from said photomultipliers;
a filtering circuit (21) connected to said adder circuit for performing operation of emphasizing an added output (S3) from said adder circuit, so as to generate an emphasized signal (S4); and
a binarizing circuit (22) connected to said filtering circuit for comparing said emphasized signal with a preset threshold level (THLD), so as to generate a binary signal (S5), said existence of said surface defect being detected if said binary signal becomes one predetermined value in course of said one scanning period.

10. A surface inspecting apparatus as defined in claim 9, wherein said monitoring circuit includes:
a photo sensor (7) disposed beside said polygon mirror for detecting said beam (LB) reflected by said polygon mirror, said beam applied to said photo sensor for each time said web (8) is scanned in said width direction; and
a timer (25) connected to said photo sensor for measuring a preset time width (T) after and in response to a sensor output (S6) from said photo sensor, said time width preset to be substantially equal to said one scanning period.

11. A surface inspecting apparatus as defined in claim 10, further comprising an AND gate (23) connected to said binarizing circuit (22) and said timer (25), said AND gate (23) generating a defect signal (S8) for representing said existence of said surface defect if said binary signal (S5) becomes said one predetermined value while said timer measures said time width (T).

12. A method of inspecting a surface of continuously transported web (8), comprising steps of:
scanning said surface of said web in a direction of a width of said web by use of a beam (LB) having a first width (L1);
forming a slot (13) to have a second width (L2) set equal to or below said first width, in blocking means (11, 12) impenetrable to said beam;
disposing said blocking means in a path of said beam from said web, said beam passed through said slot after scanning said web;
converting said beam into a photoelectric signal (S1, S2) after passing through said slot; and
evaluating said photoelectric signal, so as to detect existence of a surface defect on said web if said photoelectric signal is in a predetermined range.

13. A surface inspecting method as defined in claim 12, wherein said web (8) has a transmittance, said slot (13) is disposed behind said web, and said beam (LB) is passed through said web and then directed to said slot.

14. A surface inspecting method as defined in claim 13, wherein a polygon mirror (6) reflects said beam (LB) toward said web (8), and scans said web by rotating.

15. A surface inspecting method as defined in claim 14, wherein said photoelectric signal (S1, S2) is amplified with a large gain when said photoelectric signal has a low level, so as to facilitate evaluation of said beam (LB) passed through said slot (13) when intensity of said beam has a low level.

16. A surface inspecting method as defined in claim 15, wherein said blocking means is constituted of a pair of blocking plates (11, 12) between which said slot (13) is defined.

17. A surface inspecting method as defined in claim 15, further comprising a step of diffusing said beam (LB) at said slot (13).

18. A surface inspecting method as defined in claim 15, further comprising steps of:
disposing a transparent rod member (15) behind said slot (13);
condensing said beam (LB) passed through said slot so as to introduce said beam into said rod member;
scattering said beam into said rod member on a rear of said rod member, so as to transmit energy of said beam to two ends of said rod member; and
photoelectrically converting said energy of said beam into outputs (S1, S2) corresponding thereto at said respective ends of said rod member, said outputs constituting said photoelectric signal (S1, S2).

19. A surface inspecting method as defined in claim 18, further comprising steps of:
monitoring a period of respective operation of scanning said web (8) in said width direction with said beam (LB);
adding up said photoelectric outputs (S1, S2) so as to obtain an added output (S3);
emphasizing said added output so as to generate an emphasized signal (S4);
comparing said emphasized signal with a preset threshold level (THLD), so as to generate a binary signal (S5); and
detecting said existence of said surface defect if said binary signal becomes one predetermined value in course of said one scanning period.

20. A surface inspecting method as defined in claim 19, further comprising steps of:
disposing a photo sensor (7) beside said polygon mirror, said beam (LB) being applied for one time to said photo sensor each time said web (8) is scanned in said width direction; and
measuring a preset time width (T) after and in response to a sensor output (S6) from said photo sensor, said time width preset to be substantially equal to said one scanning period.
